(19) Europäisches Patentamt
European Patent Office
Office européen des brevets

(11) EP 1 047 738 B1

(12) EUROPEAN PATENT SPECIFICATION

(45) Date of publication and mention of the grant of the patent:
**31.03.2004 Bulletin 2004/14**

(21) Application number: **98944077.1**

(22) Date of filing: **21.09.1998**

(51) Int Cl.[7]: **C09D 7/02**, C09D 11/02, B01F 17/14

(86) International application number:
**PCT/GB1998/002859**

(87) International publication number:
**WO 1999/021925 (00.00.0000 Gazette 1999/18)**

(54) **REDUCED SHADE PAINT OR INK COMPOSITION**

ANSTRICH- ODER TINTEN-ZUSAMMENSETZUNG MIT VERMINDERTER ABTÖNUNG

COMPOSITION DE PEINTURE OU D'ENCRE A NUANCE REDUITE

(84) Designated Contracting States:
**ES GB IT NL**

(30) Priority: **24.10.1997 GB 9722392**

(43) Date of publication of application:
**02.11.2000 Bulletin 2000/44**

(73) Proprietor: **Avecia Limited**
**London W1Y 6LN (GB)**

(72) Inventors:
- **THETFORD, Dean**
  **Blackley, Manchester M9 8ZS (GB)**
- **CARTRIDGE, David, John**
  **Blackley, Manchester M9 8ZS (GB)**

(74) Representative: **Fawkes, David Melville**
**Avecia Limited**
**Intellectual Property Group,**
**P.O. Box 42,**
**Hexagon House**
**Blackley, Manchester M9 8ZS (GB)**

(56) References cited:
**EP-A- 0 252 824**
**WO-A-97/19748**
**US-A- 5 173 111**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a reduce shade paint or ink containing two or more dispersants which are phosphate esters of an optionally end-capped propylene oxide/ethylene oxide copolymer.

Phosphate esters of propylene oxide/ethylene oxide block copolymers (hereinafter PO/EO polymers) where the ester group is attached to EO are already known to the art. The known phosphate esters include both the alkyl end-capped PO/EO block copolymers and also EO/PO/EO block copolymers carrying phosphate ester groups at both ends of the polymer.

US 4,613,445 discloses phosphate esters of end-capped block copolymers of formula AOPOEO wherein A is inter alia $C_{1-24}$-alkyl and their use as corrosion inhibitors. This patent also discloses compositions comprising the phosphate esters, a buffer and an alcohol.

CA 2027302 discloses aqueous coolant compositions containing phosphate esters derived from fatty alcohol PO/EO polymers and EO/PO/EO block copolymers.

US 3,658,959 discloses carbamate insecticidal compositions containing phosphate esters of EO/PO/EO block copolymers and aqueous solutions or dispersions derived therefrom.

DE 3542441 discloses bis-monophosphate esters of EO/PO/EO block copolymers and their use in the manufacture of plant protection formulations which are essentially solvent-free.

These publications disclose either aqueous compositions containing the phosphate esters of PO/EO copolymers or concentrates for use in aqueous systems and none envisage the use of such esters to disperse particulate solids, especially pigments, in non-aqueous media.

It has now been found that phosphate esters of PO/EO block copolymers wherein the phosphate ester is attached to EO are useful in the preparation of reduced shade paints and inks.

According to the present invention there is provided a reduced shade paint or ink comprising

(a) a base paint or ink comprising a base pigment, a film-forming resin and a non-polar solvent;
(b) two or more dispersants which are phosphate esters of a compound of formula 1

$$Y-\left[(PO)_n(EO)_m\right]-H \quad (1)$$

wherein

Y is a group RO- or a group $H\text{-}(EO)_q$;
R is $C_{1-10}$-alkyl;
m and q are each, independently, from 5 to 50;
n is from 5 to 70; and

(c) a tinter composition comprising a coloured pigment, water and/or a water-miscible solvent.

The dispersants which are phosphate esters of the compound of formula 1 are hereinafter referred to as "Phosphate Dispersants".

When Y is the group RO-, the dispersant is a phosphate ester of an end-capped PO/EO block copolymer which preferably contains either 1 or 2 groups of formula $RO(PO)_n(EO)_m$- attached to each phosphorus atom and especially mixtures thereof.

When Y is the group $H\text{-}(EO)_q$- the compound of formula 1 is a diol and the dispersant is a phosphate ester which preferably contains a phosphate group at each end of the diol. It is also preferred that each phosphorus atom forms an ester linkage with either 1 or 2 diols of formula $H\text{-}(EO)_q(PO)_n(EO)_m\text{-}H$ and it is especially preferred that the dispersant is a mixture of such esters.

R may be linear or branched but is preferably linear.

R is preferably $C_{1-6}$-alkyl, more preferably $C_{1-4}$-alkyl and especially methyl.

When Y is the group RO-, n and m are preferably and independently from 5 to 40 and especially from 5 to 25. It is also preferred that the ratio of m to n is from 3:1 to 1:5 more preferably from 2:1 to 1:5 and especially from 2:1 to 1:2.

The MW of the end-capped block copolymer of formula $RO(PO)_n(EO)_m\text{-}H$ from which the dispersant is derived is preferably not less than 500 and more preferably not less than 1000. It is also preferred that the MW of this end-capped copolymer is not greater than 3,000 and especially not greater than 2,000.

When Y is the group H-$(EO)_q$-, m and q are preferably the same and are preferably, independently, from 5 to 20. In the case of the diol of formula H-$(EO)_q(PO)_n(EO)_m$-H it is also preferred that the ratio of (q + m) to n is from 2: 1 to 1:5 and especially from 1:1 to 1:5. The MW of the diol of formula H-$(EO)_q(PO)_n(EO)_m$-N from which the dispersant is derived is preferably less than 5,000 and especially less than 4,000.

The reduced shade paint or ink may contain other ingredients such as binders, fillers, fluidising agents, anti-sedimentation agents, plasticisers, humectants, coalescents, co-solvents, thickeners and preservatives. These ingredients may be soluble in, partially soluble in, insoluble in or dispersed in the non-polar solvent.

The base pigment and the coloured pigment may be organic or inorganic and may come from any of the recognised classes of pigments described, for example, in the Third Edition of the Colour Index (1971) and subsequent revisions and supplements thereto, under the chapter headed "Pigments".

Examples of organic pigments are those from the azo, disazo, condensed azo, thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives and also lakes of acid, basic and mordant dyes.

Examples of inorganic pigments are titanium dioxide (including Anatase and Rutile forms, and high UV absorbing ultra-fine titanium dioxide), zinc oxide, Prussian Blue, cadmium sulphide, iron oxides (including transparent iron oxides), ultramarine, mica (including pearlescent pigments made by surface treating mica with, for example fine titanium dioxide) and the chrome pigments, including chromates, molybdates, and mixed chromates and sulphates of lead, zinc, barium, calcium and mixtures and modifications thereof which are commercially available as greenish-yellow to red pigments under the names of primrose, lemon, middle, orange, scarlet and red chromes.

It is to be understood that the term inorganic pigment also includes carbon black, especially the chemically modified or coated versions of carbon black used in the printing and paint industries.

Examples of metallic pigments are aluminium flake, copper powder and copper flake.

Examples of metal salts of organic dyestuffs are the azo metal salt pigments such as Cl Pigment Red 48 (also known as 2B Toner or Permanent Red 2B), Cl Pigment Red 53 (also known as Lake Red C or Red Lake C), Cl Pigment Red 52, Cl Pigment Red 57 (also known as 4B Toner, Lithol Rubine, Rubine Toner or Permanent Red 4B), Cl Pigment Red 58, Cl Pigment Red 247, Cl Pigment Yellow 61, Cl Pigment Yellow 62, Cl Pigment Yellow 183 and Cl Pigment Yellow 191.

Examples of fillers are calcium carbonate, hydrated alumina, talc, quartz, silica (precipitated, pyrogenic and synthetic), metal silicates, barium and calcium sulphate, china clay, antimony oxide, powdered slate, wollastonite and chopped glass fibre.

Preferably the base pigment is inorganic, for example, iron oxide and especially a white inorganic pigment, for example, titanium dioxide.

The coloured pigment may be any pigment which is capable of altering the colour of the base paint or ink and may be inorganic or organic (including carbon black). Examples of the coloured pigments which have been found particularly suitable in the reduced shade paints and inks are carbon black, red iron oxide, phthalocyanine and dioxazine pigments.

The non-polar solvent is an organic liquid which is immiscible with water and includes aliphatic and aromatic hydrocarbons and their halogenated analogues. Examples are pentane, hexane, heptane, octane, benzene, toluene, xylene and paraffin. It is particularly preferred that the non-polar solvent is an aliphatic or aromatic petroleum distillate such as white spirits.

Examples of water-miscible solvents are polar organic liquids which are capable of forming moderate or strong hydrogen bonds as described in the article entitled "A three dimensional approach to solubility" by Crowley et al in Journal of Paint Technology, Volume 38, 1966 at page 269. Such organic liquids have a hydrogen bonding number of 5 or more as defined in this article.

Examples of polar organic liquids are amines, ethers, especially $C_{1-6}$-alkyl ethers, organic acids, esters, ketones, glycols, alcohols and amides including mixtures thereof. Numerous examples of such moderately and strongly hydrogen bonding liquids are given in the book entitled "Compatibility and Solubility" by Ibert Mellan (published 1968 by Noyer Development Corporation) in Table 2.14 on pages 28 and 40 and these organic liquids all fall within the scope of polar organic liquids as used in the present description.

Preferably the water-miscible solvent is a glycol such as ethylene diglycol, propylene glycol, hexyleneglycol and especially ethylene glycol. Other preferred water miscible solvents are the mono-alkyl ethers of ethylene and propylene glycols, particularly the $C_{1-6}$-alkyl ethers and especially methoxyethoxyethanol.

The film-forming resin may be any resin known to the art, particularly those used in the preparation of printing and packaging inks and especially those used in the preparation of solvent-based paints. Examples of film-forming resins which are used in the preparation of solvent-based paints are natural and synthetic resins such as alkyd resins, alkyd/melamine formaldehyde resins, air-drying alkyd resins, resins obtained by (co)polymerising ethylenically unsaturated monomers such as styrene-butadiene resins, styrenated acrylics, long oil alkyd resins, urethane long oil resins

and epoxy resins.

The reduced shade paint or ink may contain other adjuvants which are commonly added to paints and inks such as extenders and other materials which improve the flow characteristics of the ink or paint during application such as esters of aliphatic acids. Examples of such esters are di-octylphthalate, di-isohexylphthalate, didecylphthalate, di-undecylphthalate, di(2-ethylhexyl)phthalate and dioctyladipate.

The base paint or ink preferably contains at least 5% and preferably at least 10% by weight of pigment based on the total weight of base paint or ink. It is also preferred that the base paint or ink contains less than 60%, more preferably less than 40% and especially less than 20% base pigment relative to the total weight of the base paint or ink.

It is also preferred that the base paint or ink contains not less than 1%, more preferably not less than 5% and especially not less than 10% film-forming resin based on the total weight of the base paint or ink. Preferably, the amount of film-forming resin is less than 50%, more preferably less than 30% and especially less than 20% by weight relative to the total weight of base paint or ink.

The amount of Phosphate Dispersant is preferably at least 0.2%, more preferably at least 0.5% and especially at least 1% by weight relative to the amount of base pigment. Preferably, the amount of Phosphate Dispersant is not greater than 100%, more preferably not greater than 50%, even more preferably not greater than 20% and especially not greater than 10% relative to the amount of base pigment.

The base paint or ink may be made by any method known to the art. Thus, it may be made by mixing together the dispersant, base pigment and non-polar liquid, optionally in the presence of a film forming resin, and grinding or milling the pigment until the mean particle size is less than 15μ diameter, more preferably less than 10μ and especially less than 3μ.

The tinter composition may also contain a dispersant which may be other than a Phosphate Dispersant. The amount of dispersant and coloured pigment in the tinter formulation is preferably similar to that described hereinbefore for the base paint or ink.

The tinter composition is preferably added to the base paint or ink which has already been formulated.

The ratio of the base paint or ink which is component (a) to the tinter composition which is component (c) of the reduced shade paint or ink is preferably from 5:1 to 50:1 and especially from 10:1 to 50:1 based on the total weight of the reduced shade paint or ink.

The base pigment may be dispersed in the non-polar solvent in the presence of a dispersant which is other than a Phosphate Dispersant. In such a case the tinter pigment or composition containing the tinter pigment is preferably added to the base paint or ink after the addition of two or more Phosphate Dispersants. It is also possible to add the tinter pigment or composition containing the tinter pigment together with the Phosphate Dispersants.

However, it is preferred to disperse the base pigment in the non-polar solvent using two or more Phosphate Dispersants. In one case, it is preferred to disperse the base pigment in the non-polar solvent in the presence of two or more Phosphate Dispersants wherein in at least one dispersant, Y is the group RO- and in at least one other dispersant, Y is the group (H-(EO)-$_q$. More preferably, the base pigment is dispersed in the non-polar solvent in the presence of two or more Phosphate Dispersants wherein Y is the group H-(EO)-$_q$ and the dispersants have different n:(m+q) ratios. When the base pigment is dispersed in the non-polar solvent in the presence of only one Phosphate Dispersant, it is preferable to add another different Phosphate Dispersant prior to adding the tinter pigment or tinter pigment composition.

When the base pigment is dispersed in the non-polar solvent in the presence of two or more Phosphate Dispersants it is preferable to add the dispersants simultaneously.

As a further aspect of the invention there is provided a composition comprising two Phosphate Dispersants wherein in one dispersant, Y is the group RO- and in the other dispersant, Y is the group H-(EO)-$_q$

As a still further aspect of the invention there is provided a composition comprising two Phosphate Dispersants where Y is the group H-(EO)-$_q$ wherein the ratio of n:(q+m) for each dispersant is different.

As disclosed hereinbefore the Phosphate Dispersants are already known in the art and are typically prepared by heating a compound of formula 1 in an inert atmosphere with a phosphating agent such as phosphoric acid, polyphosphoric acid or phosphorus pentoxide at a temperature between 70 and 150°C. The dispersants are obtained as pourable liquids or low melting gums and waxes.

The reaction between the phosphating agent and the compound of formula 1 may optionally be carried out in the presence of an alcohol or alkanolamine or the phosphate esters of the compound of formula 1 may be subsequently heated with an alcohol or alkanolamine. When the reaction involves an alcohol the phosphate end group(s) are further partially esterified. When the reaction involves an alkanolamine additional ester and/or amide groups and/or amine salts of the phosphate ester of the compound of formula 1 are formed. It is believed that the reaction product is mainly an amine salt.

The Phosphate Dispersant may also be present as the salt of an alkali metal or ammonia.

The following Phosphate Dispersants have been evaluated as dispersants in reduced shade paints and inks and the references to the various agents in the tables below are retained throughout the following examples:

TABLE A

| A) Dispersants which are phosphate esters of a copolymer of general formula $MeO(PO)_n(EO)_m$-H. They were prepared by reacting the end-capped PO/EO polymer with $P_2O_5$ | | | | |
|---|---|---|---|---|
| | n | m | Polymer to $P_2O_5$ ratio | Appearance |
| Dispersant 1 | 10 | 20 | 2:1 | Brown waxy solid |
| Dispersant 2 | 15 | 15 | 2:1 | Brown viscous liquid |
| Dispersant 3 | 20 | 10 | 2:1 | Brown viscous liquid |
| Dispersant 4 | 10 | 20 | 3:1 | Brown waxy solid |
| Dispersant 5 | 15 | 15 | 3:1 | Brown viscous liquid |
| Dispersant 6 | 20 | 10 | 3:1 | Brown viscous liquid |

TABLE B

| B) Dispersants which are phosphate esters of a copolymer of general formula H-$(EO)_q(PO)_n(EO)_m$-H. They were prepared by reacting the EO/PO/EO block copolymer with $P_2O_5$. | | | | | |
|---|---|---|---|---|---|
| | q | n | m | Polymer to $P_2O_2$ ratio | Appearance |
| Dispersant 7 | 9.7 | 16.4 | 9.7 | 3:1 | Yellow oil |
| Dispersant 8 | 13.1 | 30.2 | 13.1 | 3:1 | Yellow oil |
| Dispersant 9 | 6.25 | 56.0 | 6.25 | 3:1 | Pale brown oil |
| Dispersant 10 | 7.95 | 47.4 | 7.95 | 3:1 | Brown liquid |
| Dispersant 11 | 9.09 | 56.0 | 9.09 | 3:1 | Brown liquid |
| Dispersant 12 | 12.95 | 35.3 | 12.95 | 3:1 | Yellow oil |
| Dispersant 13 | 5.7 | 39.0 | 5.7 | 3:1 | Brown liquid |
| Footnote to Table B<br>The EO/PO/EO block copolymers used to make Dispersants 7-12 were Synperonic PE/L35, Synperonic PE/L64, Pluronic L101, Synperonic PE/L92, Pluronic P102 and Pluronic L72 and Synperonic PE/L81 respectively. | | | | | |

When two or more Phosphate Dispersants are included in the reduced shade paint or ink the base paint or ink exhibits better acceptance of the tinter composition. This is irrespective as to whether the Phosphate Dispersants are added simultaneously or sequentially, whether the Phosphate Dispersants are used to disperse the base pigment in the base paint or ink, whether the Phosphate Dispersants are added together with the tinter composition or whether the Phosphate Dispersants are added at an intermediate stage in preparing the reduced shade paint or ink. The reduced shade paint or ink containing the Phosphate Dispersants also exhibit superior gloss compared with reduced shade paints and inks containing dispersants which are other than Phosphate Dispersants.

The invention is further illustrated with reference to the following examples wherein all amounts are given in parts by weight unless indicated to the contrary.

Examples 1 to 7

A flat styrene-butadiene masonry paint was prepared by mixing the following ingredients in a high speed mixer to give a white paint.

| | |
|---|---|
| 5.14 parts | Styrene-butadiene resin (Pliolite AC80, ex Goodyear) |
| 3.40 parts | Styrene-butadiene resin (Pliolite AC4, ex Goodyear) |
| 6.74 parts | Chlorinated rubber polymer (Cereclor 54DP, ex ICI PLC) |
| 1.0 part | Dispersant |
| 17.47 parts | Titanium dioxide (Tioxide TR92, ex Tioxide) |
| 27.95 parts | Extender (Microdol H600, ex Norwegian Talc) |
| 5.53 parts | Extender (Celite 281, ex Celite (UK) Ltd |
| 25.98 parts | White spirits |
| 6.79 parts | Aromatic petroleum distillate (Solvesso 100, ex Esso) |

A universal tinter formulation was added in the weight ratio of 10 parts tinter formulation to 90 parts by weight white paint both with and without post-addition of a dispersant. Where a post-addition of dispersant was made, the weight of the added dispersant was 2.5 parts percentage based in the weight of the white paint.

The white paint containing the universal tinter was coated on to a card using a K-proofer and no. 6 K-bar to give a film thickness of 60μ.

A drop of the final paint composition was also applied to the paint film and rubbed into the surface using finger pressure until the film became tacky. It was then dried at 20 to 25°C for 4 hours.

The L, a, b colour co-ordinates were then measured for the rubbed area and also the area of paint-film to which no additional paint had been applied. The difference between these two sets of measurements (ΔE) gives a measure of acceptance of the universal tinter by the base white paint. ΔL is $L_1$-$L_2$, Δa is a-$a_2$, Δb is $b_1$-$b_2$ where subscript 1 relates to the paint-film with no additional paint and subscript 2 relates to the area of paint-film to which additional paint was applied followed by finger rubbing.

$$\Delta E = \sqrt{(\Delta L)^2 + (\Delta a)^2 + (\Delta b)^2}$$

Low values of ΔE indicate good acceptance of the universal tinter.

The results are given in Tables 1, 2, 3 and 4 below. The term "flooding" means a floating of the tinter pigment to the surface giving a more intense colour.

TABLE 1

| Tinter:- Nuodex high strength lamp black (ex. Huls) | | | | | | | |
|---|---|---|---|---|---|---|---|
| Ex. | Dispersant in base paint | Post-added Dispersant | ΔL | Δa | Δb | ΔE | Visual assessment |
| 1 | Dispersant 6 | - | -1.8 | 0.1 | 0.8 | 2.0 | Flooding |
| 2 | Dispersant 8 | - | -2.4 | 0.2 | 0.4 | 2.5 | Flooding |
| 3 | Dispersant 8 + 13 | - | -1.4 | 0.4 | -0.2 | 1.5 | Slight flooding |
| 4 | SL | Dispersant 6 | 0.4 | 0.2 | 0.1 | 0.4 | Good |
| 5 | SL | Dispersant 8 | -0.6 | 0.5 | -0.1 | 0.8 | Slight flooding |
| 6 | Dispersant 8 | Dispersant 6 | 0.4 | -0.3 | 0.3 | 0.7 | Good |
| 7 | Dispersant 8 + 13 | Dispersant 8 + 13 | -0.3 | 0.1 | 0.3 | 0.5 | Good |
| Control | SL | - | -4.6 | 1.2 | 0.7 | 4.8 | Severe flooding |

Footnote to Table 1
SL is Soya lecithin
Dispersant 8 + 13 is a 50/50 mix by weight

TABLE 2

| Tinter : Nuodex Phthalocyanine Blue (ex. Huls) | | | | | | | |
|---|---|---|---|---|---|---|---|
| Ex. | Dispersant in base paint | Post-added Dispersant | ΔL | Δa | Δb | ΔE | Visual assessment |
| 8 | Dispersant 6 | - | -0.8 | 0 | -1.1 | 1.4 | Severe flooding |
| 9 | Dispersant 8 | - | 0 | -0.2 | 0.1 | 0.2 | Good |
| 10 | Dispersant 8 + 13 | - | -0.7 | -0.1 | -0.2 | 0.7 | Good |
| 11 | SL | Dispersant 6 | -0.6 | 0.2 | -1.9 | 2.0 | Severe flooding |
| 12 | SL | Dispersant 8 | -1.0 | -0.3 | -2.6 | 2.8 | Severe flooding |
| 13 | Dispersant 8 | Dispersant 6 | -0.5 | 0.1 | -0.6 | 0.1 | Good |
| Control | SL | - | -0.1 | -0.1 | -2.0 | 2.2 | Severe flooding |

Footnote to Table 2
SL and Dispersant 8 + 13 is as explained in the footnote to Table 1.

TABLE 3

| Tinter : Nuodex Red Iron Oxide (ex. Huls) | | | | | | | |
|---|---|---|---|---|---|---|---|
| Ex. | Dispersant in base paint | Post-added Dispersant | ΔL | Δa | Δb | ΔE | Visual assessment |
| 14 | Dispersant 6 | - | -0.1 | 0.2 | 0.4 | 0.5 | Good |
| 15 | Dispersant 8 | - | -1.1 | 0.8 | 0.2 | 1.4 | Slight flooding |
| 16 | Dispersant 8 + 13 | - | -0.5 | -0.1 | 0.3 | 0.6 | Good |
| 17 | SL | Dispersant 6 | -0.2 | 0.9 | 0.5 | 1.0 | Yellower |
| 18 | SL | Dispersant 8 | -2.8 | 2.0 | 2.0 | 4.0 | Very blue |
| 19 | Dispersant 8 | Dispersant 6 | -0.6 | -0.1 | 0.9 | 1.1 | Good |
| Control | SL | - | 0.2 | 1.5 | 1.3 | 2.0 | Severe shade change |

Footnote to Table 3
SL and Dispersant 8 + 13 is as explained in the footnote to Table 1.

TABLE 4

| Tinter: Nuodex Dioxazine Violet (ex. Huls) | | | | | | | |
|---|---|---|---|---|---|---|---|
| Ex. | Dispersant in base paint | Post-added Dispersant | ΔL | Δa | Δb | ΔE | Visual assessment |
| 20 | Dispersant 8 + 13 | - | -0.8 | 1.3 | -1.4 | 2.1 | Good |
| Control | SL | - | -1.2 | 2.7 | -4.0 | 5.0 | Severe flooding |

Footnote to Table 4
SL and Dispersant 8 + 13 is as explained in the footnote to Table 1.

**Claims**

**1.** A reduced shade paint or ink comprising

(a) a base paint or ink comprising a base pigment, a film-forming resin and a non-polar solvent;
(b) two or more dispersants which are phosphate esters of a compound of formula 1

$$Y\left[(PO)_n(EO)_m\right]H \quad (1)$$

wherein

Y is a group RO- or a group H-$(EO)_q$-;
R is $C_{1-10}$-alkyl;
m and q are each, independently, from 5 to 50;
n is from 5 to 70; and

(c) a tinter composition comprising a coloured pigment, water and/or a water-miscible solvent.

**2.** A paint or ink as claimed in claim 1 wherein the base pigment is an inorganic pigment.

**3.** A paint or ink as claimed in either claim 1 or claim 2 wherein the base pigment is a white pigment.

**4.** A paint or ink as claimed in any one of claims 1 to 3 wherein the base pigment is titanium dioxide.

**5.** A paint or printing ink as claimed in any one of claims 1 to 4 wherein R is methyl.

**6.** A paint or printing ink as claimed in any one of claims 1 to 5 wherein m and n are each, independently, from 5 to 25 when Y is the group RO-.

**7.** A paint or printing ink as claimed in any one of claims 1 to 6 wherein the ratio of m to n is from 2:1 to 1:5 when Y is the group RO-.

**8.** A paint or printing ink as claimed in any one of claims 1 to 4 wherein m and q are each, independently, from 5 to 20 when Y is the group $H\text{-}(EO)_q\text{-}$.

**9.** A paint or printing ink as claimed in any one of claims 1 to 4 wherein the ratio of (q+m) to n is from 1:1 to 1:5 when Y is the group $H\text{-}(EO)_q\text{-}$.

**10.** A paint or printing ink as claimed in any one of claims 1 to 9 wherein the non-polar solvent is an aliphatic or aromatic petroleum distillate, including mixtures thereof.

**11.** A paint or printing ink as claimed in any one of claims 1 to 10 wherein the water-miscible solvent is ethyleneglycol, propylene glycol, hexyleneglycol or a mono-alkyl ether of ethylene or propylene glycol.

**12.** A paint or printing ink as claimed in any one of claims 1 to 11 wherein one or more of the dispersants is added after forming the base paint or ink.

**13.** A paint or ink as claimed in any one of claims 1 to 12 wherein one of the dispersants is a phosphate ester of a compound which contains the group RO- and another dispersant is a phosphate ester of a compound which contains the group $H\text{-}(EO)_q\text{-}$.

**14.** A paint or ink as claimed in any one of claims 1 to 12 wherein all the dispersants are phosphate esters of a compound which contains the group $H\text{-}(EO)_q\text{-}$.

**15.** A paint or ink as claimed in any one of claims 1 to 14 wherein the ratio of component (a) to component (c) is from 5:1 to 50:1 by weight.

**16.** A paint or ink as claimed in any one of claims 1 to 15 wherein the ratio of component (a) to component (c) is from 10:1 to 50:1 by weight.

**17.** A composition comprising two dispersants which are phosphate esters of a compound of formula 1

$$Y\text{-}(PO)_n(EO)_m \qquad 1$$

wherein in one dispersant, Y is the group RO- and in the other dispersant Y is the group

$H\text{-}(EO)_q\text{-}$;
R is $C_{1\text{-}10}$-alkyl;
m and q are each, independently, from 5 to 50; and
n is from 5 to 70.

**18.** A composition comprising two dispersants which are both phosphate esters of a compound of formula 1

$$Y\text{-}(PO)_n(EO)_m\text{-}H \qquad 1$$

wherein

Y is the group $H\text{-}(EO)_q\text{-}$;
m and q are each, independently, from 5 to 50;
n is from 5 to 70; and the ratio n:(q+m) for each dispersant is different

**Revendications**

1. Peinture ou encre de nuance atténuée comprenant

(a)une peinture ou encre de base comprenant un pigment de base, une résine filmogène et un solvant non polaire ;
(b)deux ou plus de deux dispersants qui sont des esters phosphate d'un composé de formule 1

$$Y-\left[(PO)_n(EO)_m\right]-H \qquad (1)$$

dans laquelle

Y est un groupe RO- ou un groupe H-$(EO)_q$- ;
R est un groupe alkyle en $C_{1-10}$ ;
m et q ont chacun, indépendamment, une valeur de 5 à 50 ;
n a une valeur de 5 à 70 ; et

(c)une composition de nuanceur comprenant un pigment coloré, de l'eau et/ou un solvant miscible avec l'eau.

2. Peinture ou encre selon la revendication 1 dans laquelle le pigment de base est un pigment minéral.

3. Peinture ou encre selon la revendication 1 ou la revendication 2 dans laquelle le pigment de base est un pigment blanc.

4. Peinture ou encre selon l'une quelconque des revendications 1 à 3 dans laquelle le pigment de base est du dioxyde de titane.

5. Peinture ou encre d'impression selon l'une quelconque des revendications 1 à 4 dans laquelle R est un groupe méthyle.

6. Peinture ou encre d'impression selon l'une quelconque des revendications 1 à 5 dans laquelle m et n ont chacun, indépendamment, une valeur de 5 à 25 lorsque Y est le groupe RO-.

7. Peinture ou encre d'impression selon l'une quelconque des revendications 1 à 6 dans laquelle le rapport entre m et n est de 2:1 à 1:5 lorsque Y est le groupe RO-.

8. Peinture ou encre d'impression selon l'une quelconque des revendications 1 à 4 dans laquelle m et q ont chacun, indépendamment, une valeur de 5 à 20 lorsque Y est le groupe H-$(EO)_q$-.

9. Peinture ou encre d'impression selon l'une quelconque des revendications 1 à 4 dans laquelle le rapport entre (q+m) et n est de 1:1 à 1:5 lorsque Y est le groupe H-$(EO)_q$-.

10. Peinture ou encre d'impression selon l'une quelconque des revendications 1 à 9 dans laquelle le solvant non polaire est un distillat de pétrole aliphatique ou aromatique, y compris leurs mélanges.

11. Peinture ou encre d'impression selon l'une quelconque des revendications 1 à 10 dans laquelle le solvant miscible avec l'eau est l'éthylèneglycol, le propylèneglycol, l'hexylèneglycol ou un éther monoalkylique d'éthylèneglycol ou de propylèneglycol.

12. Peinture ou encre d'impression selon l'une quelconque des revendications 1 à 11 dans laquelle on ajoute un ou plusieurs des dispersants après la formation de la peinture ou de l'encre de base.

13. Peinture ou encre selon l'une quelconque des revendications 1 à 12 dans laquelle un des dispersants est un ester phosphate d'un composé qui contient le groupe RO- et un autre dispersant est un ester phosphate d'un composé qui contient le groupe H-$(EO)_q$-.

**14.** Peinture ou encre selon l'une quelconque des revendications 1 à 12 dans laquelle tous les dispersants sont des esters phosphate d'un composé qui contient le groupe H-$(EO)_q$-.

**15.** Peinture ou encre selon l'une quelconque des revendications 1 à 14 dans laquelle le rapport entre le composant (a) et le composant (c) est de 5:1 à 50:1 en poids.

**16.** Peinture ou encre selon l'une quelconque des revendications 1 à 15 dans laquelle le rapport entre le composant (a) et le composant (c) est de 10:1 à 50:1 en poids.

**17.** Composition comprenant deux dispersants qui sont des esters phosphate d'un composé de formule 1

$$Y—(PO)_n(EO)_m—H \qquad 1$$

dans laquelle, dans un des dispersants, Y est le groupe RO- et, dans l'autre dispersant, Y est le groupe

H-$(EO)_q$- ;
R est un groupe alkyle en $C_{1-10}$ ;
m et q ont chacun, indépendamment, une valeur de 5 à 50 ; et
n a une valeur de 5 à 70.

**18.** Composition comprenant deux dispersants qui sont tous deux des esters phosphate d'un composé de formule 1

$$Y—(PO)_n(EO)_m—H \qquad 1$$

dans laquelle

Y est le groupe H-$(EO)_q$- ;
m et q ont chacun, indépendamment, une valeur de 5 à 50 ;
n a une valeur de 5 à 70 ; et
le rapport n:(q+m) pour chaque dispersant est différent.

## Patentansprüche

**1.** Anstrich oder Tinte mit verminderter Abtönung, umfassend:

(a) Basisanstrich oder -tinte, der bzw. die ein Basispigment, ein filmbildendes Harz und ein unpolares Lösungsmittel umfasst;

(b) zwei oder mehr Dispergiermittel, die Phosphatester einer Verbindung mit der Formel 1

$$Y\text{-}[\text{-}(PO)_n(EO)_m\text{-}]\text{-}H \qquad (1)$$

sind, wobei

Y eine Gruppe RO- oder eine Gruppe H-$(EO)_q$ist;
R $C_1$- bis $C_{10}$-Alkyl ist;
m und q jeweils unabhängig 5 bis 50 sind;
n 5 bis 70 beträgt; und

(c) Abtönzusammensetzung, die ein farbiges Pigment, Wasser und/oder ein wassermischbares Lösungsmittel umfasst.

**2.** Anstrich oder Tinte nach Anspruch 1, wobei das Basispigment ein anorganisches Pigment ist.

3. Anstrich oder Tinte nach Anspruch 1 oder Anspruch 2, wobei das Basispigment ein weißes Pigment ist.

4. Anstrich oder Tinte nach einem der Ansprüche 1 bis 3, wobei das Basispigment Titandioxid ist.

5. Anstrich oder Drucktinte nach einem der Ansprüche 1 bis 4, wobei R Methyl ist.

6. Anstrich oder Drucktinte nach einem der Ansprüche 1 bis 5, wobei m und n jeweils unabhängig 5 bis 25 sind, wenn Y die Gruppe RO- ist.

7. Anstrich oder Drucktinte nach einem der Ansprüche 1 bis 6, wobei das Verhältnis von m zu n 2:1 bis 1:5 beträgt, wenn Y die Gruppe RO- ist.

8. Anstrich oder Drucktinte nach einem der Ansprüche 1 bis 4, wobei m und q jeweils unabhängig 5 bis 20 sind, wenn Y die Gruppe $H-(EO)_q-$ ist.

9. Anstrich oder Drucktinte nach einem der Ansprüche 1 bis 4, wobei das Verhältnis (q + m) zu n 1:1 bis 1:5 beträgt, wenn Y die Gruppe $H-(EO)_q-$ ist.

10. Anstrich oder Drucktinte nach einem der Ansprüche 1 bis 9, wobei das unpolare Lösungsmittel ein aliphatisches oder aromatisches Erdöldestillat einschließlich Mischungen davon ist.

11. Anstrich oder Drucktinte nach einem der Ansprüche 1 bis 10, wobei das wassermischbare Lösungsmittel Ethylenglykol, Propylenglykol, Hexylenglykol oder ein Monoalkylether von Ethylen- oder Propylenglykol ist.

12. Anstrich oder Drucktinte nach einem der Ansprüche 1 bis 11, wobei eines oder mehrere der Dispergiermittel nach Bilden des Basisanstrichs.oder der Basistinte zugesetzt wird bzw. werden.

13. Anstrich oder Tinte nach einem der Ansprüche 1 bis 12, wobei eines der Dispergiermittel ein Phosphatester einer Verbindung ist, die die Gruppe ROenthält, und ein anderes Dispergiermittel ein Phosphatester einer Verbindung ist, die die Gruppe $H-(EO)_q-$ enthält.

14. Anstrich oder Tinte nach einem der Ansprüche 1 bis 12, wobei alle der Dispergiermittel Phosphatester einer Verbindung sind, die die Gruppe $H-(EO)_q$enthält.

15. Anstrich oder Tinte nach einem der Ansprüche 1 bis 14, wobei das Verhältnis von Komponente (a) zu Komponente (c) 5:1 bis 50:1 beträgt, bezogen auf das Gewicht.

16. Anstrich oder Tinte nach einem der Ansprüche 1 bis 15, wobei das Verhältnis von Komponente (a) zu Komponente (c) 10:1 bis 50:1 beträgt, bezogen auf das Gewicht.

17. Zusammensetzung, die zwei Dispergiermittel umfasst, die Phosphatester einer Verbindung mit der Formel 1

$$Y-(PO)_n(EO)_m-H \qquad 1$$

sind, wobei in einem Dispergiermittel Y die Gruppe RO- ist und in dem anderen Dispergiermittel Y die Gruppe

$H-(EO)_q-$ ist;
R $C_1$- bis $C_{10}$-Alkyl ist;
m und q jeweils unabhängig 5 bis 50 sind; und
n 5 bis 70 beträgt.

18. Zusammensetzung, die zwei Dispergiermittel umfasst, die beide Phosphatester einer Verbindung mit der Formel 1

$$Y-(PO)_n(EO)_m-H \qquad 1$$

sind, wobei

Y die Gruppe H-$(EO)_q$- ist;
m und q jeweils unabhängig 5 bis 50 sind;
n 5 bis 70 beträgt;

und das Verhältnis von n: (q + m) für jedes Dispergiermittel unterschiedlich ist.